# EUROPÄISCHE PATENTSCHRIFT

(11) **EP 3 215 974 B1**
(45) Veröffentlichungstag und Bekanntmachung des Hinweises auf die Patenterteilung: **06.03.2024**
(21) Anmeldenummer: 15828734.2
(22) Anmeldetag: 05.11.2015
(51) Int. Cl.: G06F 21/32, H04L 9/32, H04L 9/40, H04W 12/082, H04W 4/02, H04W 12/065

(54) **VERFAHREN ZUM BEREITSTELLEN EINES ZUGANGSCODES AUF EINEM PORTABLEN GERÄT UND PORTABLES GERÄT**
METHOD FOR PROVIDING AN ACCESS CODE IN A PORTABLE DEVICE, AND PORTABLE DEVICE
PROCÉDÉ POUR FOURNIR UN CODE D'ACCÈS À UN APPAREIL PORTABLE, ET APPAREIL PORTABLE

(30) Priorität: 06.11.2014 DE 102014116183
(43) Veröffentlichungstag der Anmeldung: 13.09.2017
(73) Patentinhaber: Bundesdruckerei GmbH, 10969 Berlin (DE)
(72) Erfinder: WOLF, Andreas, 07743 Jena (DE)
(74) Vertreter: Bittner, Thomas L.
(86) Internationale Anmeldenummer: PCT/DE2015/100469
(87) Internationale Veröffentlichungsnummer: WO 2016/070872

(56) Entgegenhaltungen:
- DE-A1-102005 059 001
- GB-A- 2 417 858
- US-A1- 2011 205 016
- US-A1- 2012 169 461

## Beschreibung

Die Erfindung betrifft ein Verfahren zum Bereitstellen eines Zugangscodes auf einem portablem Gerät und ein portables Gerät.

### Hintergrund

In Verbindung mit verschiedensten Anwendungen besteht die Notwendigkeit für die Kontrolle des Zugangs von Personen zu einer bestimmten Örtlichkeit, sei es zum Beispiel ein Betriebs-oder Firmengelände oder auch ein Veranstaltungshalle Bekannte Zugangskontrollsysteme arbeiten zum Beispiel kartenbasiert, was bedeutet, dass berechtigte Personen über eine Karte verfügen, zum Beispiel eine Chipkarte oder einer Karte mit einem Magnetstreifen oder einem aufgedruckten Barcode, die von einem Zugangskontrollgerät ausgewertet werden kann, um die Zugangsberechtigung des Kartennutzers zu prüfen. Auf diese Weise kann eine besitzbasierte Zugangskontrolle zum Beispiel mit einer wissensbasierten Zugangskontrolle kombiniert werden, zum Beispiel einer persönlichen Identifikationsnummer, die auf der Karte oder in einer Datenbank gespeichert ist und deren Eingabe vom Zugangskontrollgerät ausgewertet wird.

Auch ist bekannt, Biometrieverfahren (personenbasierte Kontrolle) einzusetzen. Auf diese Weise sind komplexe Prüfszenearien für die Zugangskontrolle mit Hilfe der Zugangskarte implementierbar.

Die Kontrolle erfolgt bei den verschiedenen Systemen unmittelbar am Zugangskontrollpunkt in geeigneter Form, indem auf der Zugangskarte gespeicherte Informationen ausgelesen werden, beispielsweise mittels Magnetstreifenleser, kontaktbehaftete oder kontaktlose Smartcard, Strichcodeleser oder dergleichen.

Bei den bekannten Zugangskontrollsystemen werden die mit der Zugangskontrolle unmittelbar verbundenen Handlungen durch den Nutzer der Zugangskarte direkt am Kontrollpunkt vollzogen.

Dies kann an Zugangssystemen zu Schlangen und hiermit verbundenen Wartezeiten für die den Zugang begehrenden Personen führen, zum Beispiel zu Stoßzeiten an einem Betriebseingang oder auch am Zugangstor eines Veranstaltungsortes wie einem Stadion oder einer Konzerthalle.

Das Dokument WO 2010/112586 A1 offenbart ein Verfahren zur Zugangskontrolle. Mit einem Mobiltelefon wird ein Identifikationscode an einen Zugangsknoten gesendet. Falls der Identifikationscode als gültig erkannt wird, wird von dem Zugangsknoten ein Zugangscode an das Mobiltelefon gesendet und auf einer Anzeige des Mobiltelefons dargestellt. Mit einer Kamera wird der Zugangscode erfasst und, falls der Zugangscode als gültig erkannt wird, der Zugang gewährt.

Das Dokument US 2013/0262873 A1 offenbart ein Verfahren und ein System zum Authentifizieren von Nutzern. Ein Codeschlüssel wird an ein Mobilgerät eines Nutzers übersandt. Mittels des Codeschlüssels wird eine Kommunikation zwischen dem Mobilgerät und einem Server verschlüsselt. Biometrische Daten des Nutzers werden an den Server übersandt. Der Server bestimmt ein biometrisches Modell des Nutzers zur späteren Authentifizierung. Ein verschlüsseltes biometrisches Modell wird in dem Mobilgerät gespeichert.

Aus dem Dokument US 2012/0169461 A1 ist ein System zur Zugangskontrolle bekannt. Nachdem ein Benutzer eines mobilen Geräts, beispielsweise eines Telefons, registriert ist, werden in dem Telefon mittels Herunterladen Informationen betreffend ein Zugangstor oder -portal hinterlegt. Begehrt der Nutzer Zugang, muss er sich gegenüber dem Telefon authentifizieren, worauf der Zugang freigegeben wird. Alternativ kann vorgesehen sein, Freigabesignale von einem zentralen Server zu versenden.

Die Verwendung von biometrischen Daten bei der Authentifizierung im Rahmen der Zugriffskontrolle ist im Dokument US 2011/0205016 A1 beschrieben.

Das Dokument GB 2 417 858 A offenbart Mobiltelefone und drahtlose Kommunikatoren, die über einen kurzreichweitigen Infrarot- oder Bluetooth-Transceiver verfügen, der mit einer Zugangskontrolle kommunizieren kann, die ein elektrisches Schloss oder ein Alarmsystem bedient.

Die Zugangskontrolle ermöglicht den automatischen Zugang zu jedem autorisierten Benutzer, der ein Mobiltelefon in seiner Nähe trägt. Durch einen automatischen Authentifizierungsprozess, der auf geheimen verschlüsselten Codes basiert, wird der Zugang gewährt oder verweigert. Die Gewährung des Zugangs veranlasst, dass ein Aktuator über eine Schnittstelle der Zugangskontrolle ein Türschloss öffnet oder ein Steuerflag setzt. Die Zugangskontrolle speichert die Benutzerliste mit den Anmeldeangaben in einem lokalen Speicher, der von einer entfernten sicheren Datenbank über ein öffentliches Netzwerk (kontrolliert von einem Master-Datenbankadministrator) aktualisiert wird. Die Daten zur Mobiltelefon- und Benutzeridentität werden mit einem eindeutigen Schlüssel verschlüsselt, der von einem fortlaufenden Zeitstempel abgeleitet wird und der von der Zugangskontrolle an das Mobiltelefon geliefert wird. Das Verschlüsselungsergebnis wird in Echtzeit vom Mobiltelefon generiert und ist nur der Zugangskontrolle bekannt.

### Zusammenfassung

Aufgabe der Erfindung ist es, ein Verfahren zum Bereitstellen eines Zugangscodes auf einem portablen Gerät sowie ein portables Gerät anzugeben, die bei Gewährleistung eines hohen Sicherheitsstandards eine einfache und zeitsparende sowie benutzerfreundliche Abwicklung der Zugangskontrolle ermöglichen.

Zur Lösung der Aufgabe ist ein Verfahren zum Bereitstellen eines Zugangscodes auf einem portablem Gerät nach dem unabhängigen Anspruch 1 geschaffen. Der nebengeordnete Anspruch 10 betrifft ein portables Gerät. Ausgestaltungen sind Gegenstand von abhängigen Unteransprüchen.

Nach einem Aspekt ist ein Verfahren zum Bereitstellen eines Zugangscodes auf einem portablen Gerät geschaffen, welches eine Benutzerschnittstelle aufweist und für eine drahtlose Datenkommunikation eingerichtet ist. Über die Benutzerschnittstelle ist des dem Nutzer des portablen Geräts insbesondere ermöglicht, Daten einzugeben. Die Benutzerschnittstelle kann eine Tastatur und / oder einen Touchscreen umfassen. Bei dem portablen Gerät kann es sich zum Beispiel um ein Mobilfunktelefon, einen Tabletcomputer oder einen portablen Personalcomputer handeln. Bei dem Verfahren zum Bereitstellen des Zugangscodes werden Referenzdaten für eine Authentifizierung in einer zentralen Datenverarbeitungseinrichtung hinterlegt. Eine Datenkommunikation zwischen dem portablen Gerät und der zentralen Datenverarbeitungseinrichtung ist unter Einbeziehung einer drahtlosen Datenkommunikation ermöglicht, zum Beispiel über ein Mobilfunknetz. Die in der zentralen Datenverarbeitungseinrichtung hinterlegten Referenzdaten umfassen personenbezogene Daten, die biometrische Referenzdaten enthalten, für einen Nutzer des portablen Geräts sowie eine Gerätekennung für das portable Gerät. Bei dem Verfahren wird als Reaktion auf ein detektiertes Ereignis ein Authentifizierungsprozess gestartet, bei dem der Nutzer authentifiziert wird. Hierbei werden zur Nutzerauthentifizierung in der zentralen Datenverarbeitungseinrichtung und / oder im portablen Gerät die Referenzdaten und Authentifizierungsdaten ausgewertet. Das Auswerten kann einen Vergleich von Referenzdaten und Authentifizierungsdaten umfassen. Die Authentifizierungsdaten enthalten personenbezogene Authentifizierungsdaten für den Nutzer, einschließlich biometrischer Authentifizierungsdaten, sowie eine Authentifzierungsgerätekennung für das portable Gerät. Als Reaktion auf die erfolgreiche Authentifizierung des Nutzers wird in dem portablen Gerät ein Zugangscode bereitgestellt, welcher zum Bestimmen einer Zugangsberechtigung des Nutzers von einem Zugangskontrollgerät auswertbar ist, wenn der Nutzer Zugang begehrt.

Nach einem weiteren Aspekt ist ein portables Gerät mit einer Benutzerschnittstelle und einem Kommunikationsmodul für eine drahtlose Datenkommunikation geschaffen, welches mittels einer auf dem portablen Gerät installierten Software-Applikation zur Verwendung bei dem Verfahren zum Bereitstellen des Zugangscodes eingerichtet ist.

Zum Übertragen oder Austauschen von elektronischen Daten bei dem Verfahren kann zwischen dem mobilen Gerät und der zentralen Datenverarbeitungseinrichtung ein gesicherter Datenkanal für eine gewünschte Zeit ausgebildet werden. Ein solcher gesicherter Datenkanal kann in Abhängigkeit von dem Sicherheitsstandard des Zugangskontrollsystems für eine sichere Datenkommunikation zwischen dem portablen Gerät und der zentralen Datenverarbeitungseinrichtung genutzt werden.

Handelt es sich bei dem portablen Gerät zum Beispiel um ein Mobilfunktelefon, ist als Gerätekennung beispielsweise die sogenannte IMEI-Nummer für das Verfahren nutzbar (IMEI - International Mobile Equipment Identity). Eine ein Gerät in einem Netzwerksystem individualisierende Gerätekennung kann im Netzwerk übergreifend oder auch nur lokal in einem Teil des Netzwerks gültig sein.

Zum Bereitstellen auf dem portablen Gerät kann der Zugangscode im portablen Gerät selbst und / oder in der zentralen Datenverarbeitungseinrichtung erzeugt werden. Im Fall des Erzeugens in der zentralen Datenverarbeitungseinrichtung wird der Zugangscode dann an das portable Gerät übertragen und dort in der übertragenen Form oder in geänderter Form bereitgestellt, zum Beispiel zum Ausgeben über ein Display.

Die Einbeziehung biometrischer Daten zur Personenidentifikation ermöglicht eine personalisierte Zugangskontrolle mit hohem Sicherheitsstandard.

Das Authentifizieren des Nutzers und das Bereitstellen des Zugangscodes auf dem portablen Gerät erfolgen, bevor der Nutzer den Ort des Zugangskontrollgeräts erreicht, so dass der Nutzer vorbereitet ist, beim Erreichen des Zugangskontrollortes den Zugangscode auf dem portablen Gerät unmittelbar und ohne zeitliche Verzögerung dem Zugangskontrollgerät zu präsentieren. Auf diese Weise können zum Beispiel Wartezeiten für Zugang begehrende Personen an einem Zugangskontrollgerät vermieden werden.

Der Authentifizierungsprozess wird mittels einer auf dem portablen Gerät laufenden Applikation gestartet, wenn ein Erreichen eines vorbestimmten Orts detektiert wird. Alternativ kann der Authentifizierungsprozess mittels einer auf dem portablen Gerät laufenden Applikation gestartet werden, wenn folgende Ereignisse detektiert werden: Erreichen eines vorbestimmten Orts und Erreichen einer Zeitvorgabe. Die auf dem portablen Gerät laufende Applikation kann als Softwaremodul ausgeführt sein, welches auf das portable Gerät heruntergeladen und hier installiert wurde. Wird von der Applikation eines der auslösenden Ereignisse detektiert, kann der Authentifizierungsprozess gleich oder zeitlich versetzt zum Detektieren des Ereignisses gestartet werden. Es kann vorgesehen sein, dass die Applikation eine Bestätigung vom Nutzer des portablen Geräts erfasst und erst danach den Authentifizierungsprozess initiiert. Mit Hilfe der Applikation kann der Nutzer zum Beispiel eine Stadt oder ein Betriebsgelände als vorbestimmten Ort festlegen, so dass der Authentifizierungsprozess gestartet werden kann, wenn das portable Gerät die Stadt oder das Betriebsgelände erreicht oder in einen vorgegebenen Umkreis hierzu eintritt. Es kann vorgesehen sein, dass mit Hilfe des portablen Geräts Signale detektiert werden, die lediglich im Umkreis des Ortes, für den die Zugangskontrolle ausgeführt wird, zu empfangen sind. Eine solche Selektion von Signalen kann beispielsweise mittels Nutzung ausgewählter Frequenzbereiche und / oder beschränkter Reichweite der gesendeten Signale erreicht werden. In Verbindung mit dem Erreichen einer Zeitvorgabe kann es sich beispielsweise um einen Tag oder eine Tageszeit handeln, deren Erreichen mit einem Zeitmodul des portablen Geräts überprüft und detektiert wird. Die Applikation kann auch als Reaktion auf optische Sichtbarkeit von Signalen starten, zum Beispiel nach dem Aufnehmen eines bestimmten QR-Codes von einer Hauswand, beispielweise mittels der Kamera des Mobilfunktelefons. In diesem Fall kann der Authentifizierungsprozess als Reaktion auf eine Benutzeraktion am portablen Gerät starten.

Zum Bestimmen des Erreichens des vorbestimmten Orts können elektronische Informationen einer Lokalisierungseinrichtung des portablen Geräts ausgewertet werden. Zum Beispiel kann das portable Gerät ein GPS-Modul (GPS - Global Positioning System) aufweisen, so dass hiermit eine Bestimmung des momentanen Aufenthaltsorts des portablen Geräts ermöglicht ist. Diese elektronische Information kann dann von der auf dem portablen Gerät laufenden Applikation genutzt werden, um zu bestimmen, ob der Authentifizierungsprozess gestartet werden soll.

Die personenbezogenen Authentifizierungsdaten können für den Nutzer, einschließlich der biometrischen Authentifizierungsdaten, wenigstens teilweise mittels eines oder mehrerer Funktionsmodule des portablen Geräts erfasst werden. In den verschiedenen Ausgestaltungen können die biometrischen Referenzdaten wie auch die biometrischen Authentifizierungsdaten eine oder mehreren Arten von biometrischen Daten und / oder hieraus abgeleiteten Informationen umfassen, zum Beispiel Fingerabdruck, Irisbild und / oder Gesichtsbild. Auch eine Unterschriftenerkennung und / oder ein Doodle-Malen kann einbezogen werden. Auch eine Sprachprobe kann alternativ oder ergänzend für die Authentifizierung herangezogen werden. Die biometrischen Daten können teilweise oder ausschließlich mittels des portablen Geräts erfasst werden, welches zu diesem Zweck über entsprechende Funktionsmodule verfügt, zum Beispiel einen Fingerabdrucksensor, eine Kamera und / oder ein berührungsempfindliches Display.

Der Zugangscode kann über eine Ausgabeeinrichtung des portablen Geräts ausgegeben werden. Es kann vorgesehen sein, dass der Zugangscode, zum Beispiel ein Strichcode oder ein QR- oder anderer 2D-Barcode, über eine Anzeigeeinrichtung des portablen Geräts ausgegeben wird. Auch kann der Zugangscode alternativ oder ergänzend auf einem Speicherbaustein des portablen Geräts gespeichert sein, derart, dass insbesondere ein kontaktloses Auslesen mit Hilfe eines zugeordneten Lesegeräts des Zugangskontrollsystems ermöglicht ist. Hierfür kann zum Beispiel die RFID-Technologie (RFID - Radio Frequency Identification) genutzt werden. Das Ausgeben ermöglicht allgemein eine Präsentation des nach erfolgreicher Authentifizierung bereitgestellten Zugangscodes gegenüber dem Zugangskontrollgerät.

Der Zugangscode kann dem Zugangskontrollgerät mittels NFC-Kommunikation (NFC - Near Field Communication) präsentiert werden.

Der Zugangscode kann als ein Zugangscode zeitlich begrenzter Gültigkeitsdauer bereitgestellt werden. Die zeitliche Begrenzung der Gültigkeitsdauer kann zum Beispiel darin bestehen, dass der in dem portablen Gerät bereitgestellte Zugangscode nach einem vorbestimmten Zeitraum ungültig wird. Auch kann vorgesehen sein, dass der Zugangscode erst zu einem Zeitpunkt gültig wird, der zeitlich beabstandet zur Bereitstellung in der Zukunft liegt. Es kann vorgesehen sein, dass nach Ablauf der Gültigkeitsdauer der Zugangscode durch die Applikation auf dem portablen Gerät automatisch gelöscht oder ungültig gemacht wird.

Der Zugangscode wird als ein örtlich begrenzter Zugangscode bereitgestellt, welcher seine Gültigkeit verliert, wenn festgestellt wird, insbesondere durch die Applikation auf dem portablen Gerät, dass das portable Gerät nach dem Bereitstellen des Zugangscodes einen vorgegebenen Ortsbereich verlässt. Verlässt beispielsweise das portable Gerät nach dem Bereitstellen des Zugangscodes einen vorgegebenen Ortsbereich, zum Beispiel eine Stadt, einen Stadtteil oder ein Betriebsgelände, so kann die Applikation eingerichtet sein, beim Feststellen dieses Ereignisses den bereitgestellten Zugangscode nachträglich zu löschen oder anders ungültig zu machen. Hierbei kann zum Beispiel die Ortsinformation eines GPS-Moduls des portablen Geräts ausgewertet werden.

Ein Teil der biometrischen Authentifizierungsdaten kann mittels einer Sensoreinrichtung vor Ort am Zugangskontrollgerät erfasst werden. Ein bereits vorher begonnener und noch nicht abgeschlossener Authentifizierungsprozess kann mittels derart erfasster biometrischer Daten vervollständigt und abgeschlossen werden. Auch bei dieser Ausführungsform wird der Authentifizierungsprozess gestartet, bevor das portable Gerät den Ort des Zugangskontrollgeräts erreicht. Im Fall erhöhter Sicherheitsbedürfnisse kann mit dieser Ausgestaltung eine erweiterte Datenerfassung und Auswertung vorgesehen sein.

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine schematische Darstellung zur Zugangskontrolle und
- Fig. 2: ein Ablaufdiagramm zu einem Verfahren zum Bereitstellen eines Zugangscodes auf einem portablen Gerät.

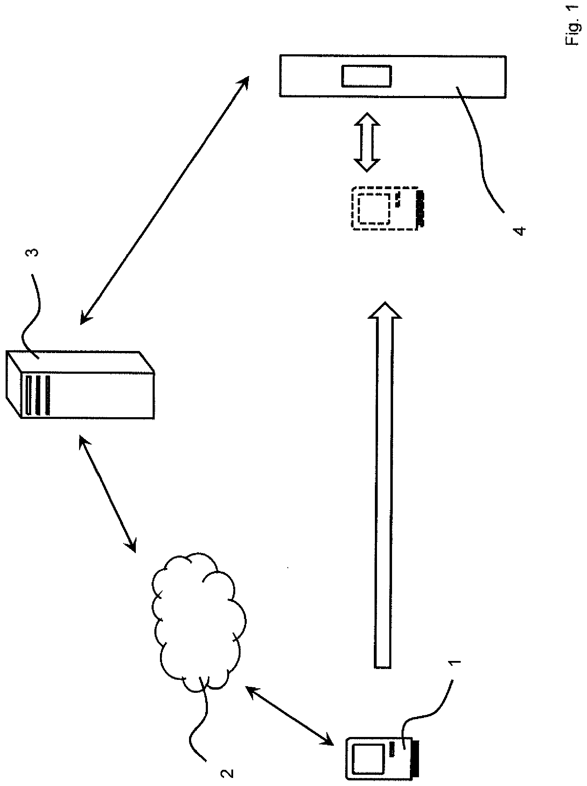

Fig. 1 zeigt eine schematische Darstellung in Verbindung mit einer Zugangskontrolle. Einem Nutzer ist ein portables Gerät 1 zur Verfügung gestellt, welches über ein drahtloses Kommunikationsnetzwerk 2, zum Beispiel ein Mobilfunknetzwerk, elektronischen Daten mit einer zentralen Datenverarbeitungseinrichtung 3 austauschen kann, die zum Beispiel mit einem Server gebildet ist. Die zentrale Datenverarbeitungseinrichtung 3 ist Teil eines Zugangskontrollsystems, zum Beispiel in Verbindung mit einem Betriebsgelände oder einer Sport oder Veranstaltungsarena.

Auf dem portablen Gerät 1 wird dem Nutzer ein Zugangscode bereitgestellt, den der Nutzer dann gegenüber einem Zugangskontrollgerät 4 präsentieren kann, wenn der Nutzer mit dem portablen Gerät 1 an den Ort des Zugangskontrollgeräts 4 gelangt. Das Verfahren zum Bereitstellen des Zugangscodes wird bei dem gezeigten Ausführungsbeispiel an einem hiervon entfernten Ort schon gestartet, so dass der Zugangscode auf dem portablen Gerät 1 zur Verfügung steht, wenn der Nutzer mit dem portablen Gerät 1 an das Zugangskontrollgerät 4 gelangt.

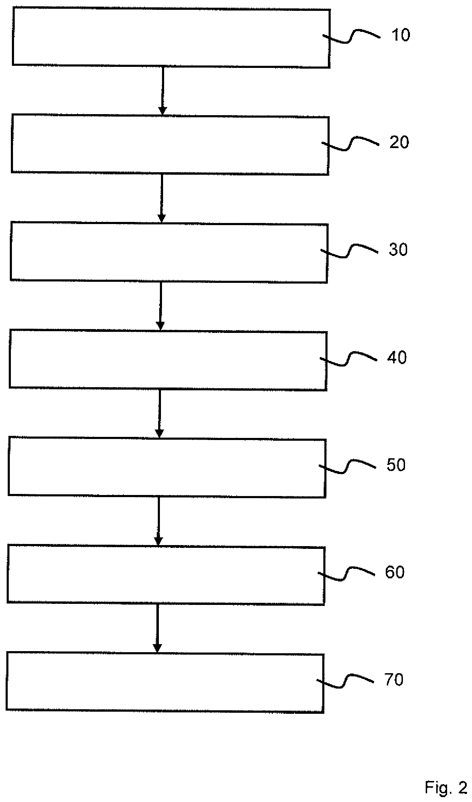

Nachfolgend werden weitere Aspekte des Verfahrens zum Bereitstellen des Zugangscodes auf dem portablen Gerät 1 unter Bezugnahme auf das Ablaufdiagramm in Fig. 2 erläutert.

Das protable Gerät 1 kann ein netzfähiges IT-Gerät sein, das ein Benutzer aus anderem Grund schon besitzt (BYOD - Bring Your Own Device), zum Beispiel ein Mobilfunktelefon, insbesondere ein sogenantes Smartphone. Auf dem portablen Gerät 1 läuft eine Anwendung (Software-Applikation), die drahtlos über das Kommunikationsnetzwerk 2 mit der zentralen Datenverarbeitungseinrichtung 3 Kontakt aufnehmen und mit dieser Daten austauschen kann. Diese Anwendung wird vorab verteilt, sie kann etwa im Internet oder zum Download zur Verfügung stehen. Außerdem ist ein Smartphone regelmäßig personengebunden, und sein Besitz kann bereits als ein Authentifizierungsfaktor verwendet werden.

Nach Installation der Anwendung auf dem portablen Gerät 1 registriert sich der Benutzer bei der zentralen Datenverarbeitungseinrichtung 3 (Schritt 10 in Fig. 1). Hierbei können elektronische Schlüssel zur Absicherung der Kommunikation ausgetauscht, benötigte Personendaten und die IMEI des IT-Geräts registriert werden. Abhängig vom gewünschten Sicherheitsniveau werden die für das verwendete Authentifizierungsverfahren erforderlichen Referenzdaten über das portable Gerät 1 oder auch in der zentralen Datenverarbeitungseinrichtung 3 erfasst. So können zum Beispiel Gesichtsbilddaten für eine Gesichtserkennung etwa durch den Benutzer live erfasst und dann qualitätsgesichert abgespeichert werden. Diese Daten können beispielweise auch vom Reisepass des Nutzers erfasst werden, oder elektronische Bilder sind in einer Mitarbeiter-Datenbank schon vorhanden.

Begehrt jemand Zugang zu einer durch ein Zugangskontrollsystem gesicherten Umgebung, oder ist bekannt / steht zu vermuten, dass er dieses in Kürze tun will, wird ein Authentifizierungsprozess durch die Anwendung auf dem portablen Gerät 1 gestartet. Vor dem Auslösen des Authentifizierungsprozesses wird ein Ereignis erfasst oder detektiert (Schritt 20).

Beim Authentifizierungsprozess wird eine sogenannte Challenge angefordert oder unaufgefordert auf das portable Gerät 1 geschickt (Schritt 30). So könnte ein Betriebsmitarbeiter eine derartige Challenge jeden Morgen auf sein portables Gerät 1 gesendet bekommen. Alternativ könnte die Challenge (etwa bei Besuchern) in einer Besucherzentrale übergeben werden, beispielsweise per 3D-Barcode.

Die Challenge kann personen- und / oder zeitgebunden sein, also nur für einen bestimmten Benutzer und nur für einen bestimmten Zeitraum gültig sein. Wird der Personenbezug weggelassen, was zu einer Einschränkung der Sicherheitsfunktion führen wird, aber für manche Anwendungen tolerierbar ist, kann die Challenge zeitabhängig (und nicht personenabhängig) im Vorfeld des Zugangskontrollpunktes verfügbar sein und durch das portable Gerät 1 automatisch bestimmt werden. Hierbei können zum Beispiel elektronische Signale eines GPS-Sensors im portablen Gerät 1 und / oder Zeitinfomationen ausgewertet werden. Auch könnte der Nutzer des portablen Geräts 1 durch die hierauf laufende Anwendung veranlasst werden, einen Barcode (QR, Datamatrix, Aztec, etc.) zu scannen.

Die Challenge liegt bereits vor dem Eintreffen des Benutzers am Zugangskontrollgerät 4 auf dem portablen Gerät 1 vor. Ein QR-Code kann etwa bereits vor dem Erreichen des Kontrollpunktes gescannt werden, wenn er groß genug an irgendeiner Wand oder auf anmutig im Gelände verteilten Displays angezeigt wird.

Liegt die Challenge vor, bittet die Anwendung auf dem portablen Gerät 1 den Benutzer um Durchführen der Authentifizierung. Zu diesem Zweck bringt der Benutzer Authentifizierungsdaten bei (Schritt 40). Der Benutzer erfasst zum Beispiel ein Bild seines Gesichtes, einen Fingerabdruck, eine Sprachprobe und / oder andere biometrische Daten wie Unterschrift oder Doodle-Malen. Oder er gibt ein Geheimnis ein, etwa eine Passphrase. Oder er legt eine NFC-Karte an das portable Gerät 1. Möglich sind auch Kombinationen dieser Faktoren. Das portable Gerät 1 stellt einen sicheren Übertragungskanal zur zentralen Datenverarbeitungseinrichtung 3 her (Schritt 50) und übermittelt an diese eine anhand der Challenge und charakteristischer Daten des portablen Geräts 1 wie etwa der IMEI des portablen Geräts 1 ermittelte Antwort (Response, Schritt 60). Außerdem übermittelt das protbale Gerät 1 die vorher für die Authentifikation erhobenen Authentifizierungsdaten, im Falle biometrischer Verfahren zum Beipiel auch hieraus extrahierten Merkmalsdaten.

Es ist möglich, die Verifikation auf dem portabelen Gerät 1 und / oder in der zentralen Datenverarbeitungseinrichtung 3 durchzuführen, insbesondere abhängig vom zu erreichenden Sicherheitsniveau. Bei Scheitern einer biometrischen Verifikation kann diese wiederholt werden.

Nach erfolgreicher Prüfung der Antwort und der übertragenen Authentifizierungsdaten versendet die zentralen Datenverarbeitungseinrichtung 3 an das portable Gerät 1 einen Zugangscode (Schritt 70), der vorzugsweise eine bestimmte Zeit gültig ist, zum Beispiel einen Tag.

Am Kontrollpunkt ist nur noch die Prüfung dieses Zugangscodes durch das Zugangskontrollgerät 4 erforderlich, die etwa durch Präsentation eines 2D-Barcodes gegenüber dem Zugangskontrollgerät 4 erfolgt. Auch Präsentation per NFC ist möglich.

Die Sicherheitseigenschaften eines derartigen Prozesses und seiner Implementierung lassen sich entsprechend den anwendungsbezogenen Erfordernissen skalieren. Die eigentliche Prüfung am Kontrollpunkt ist nur noch das Auswerten des Zugangscodes, etwa eines Bar- oder Strichcodes. Auch bei Ergänzung des Systems durch weitere Authentifikationsverfahren sind am Kontrollpunkt keine Hardware-Änderungen erforderlich.

Ist das System anfänglich nur an das portabele Gerät 1, insbesondere ein Mobiltelefon, bzw. den Besitz desselben gebunden, kann in einer Ausführung der zugangsberechtigende Code, beispielsweise ein Strichcode, übermittelt werden, sobald die Challenge vom richtigen portabelen Gerät 1 beantwortet wird. Dieser Code wird am Zugangskontrollpunkt präsentiert. Später entschließt man sich, zusätzlich Gesichtserkennung einzusetzen. Jetzt gehört zur Beantwortung der Challenge auch noch die Übermittlung von Biometriedaten (Bild oder Merkmalsvektor). Am Zugangskontrollpunkt selbst ist nach wie vor nur die Präsentation des Codes erforderlich. Später nachgerüstete weitere Sensorik und / oder Hardwaretoken (etwa eine NFC-Karte oder ähnlich) erfordern also am Zugangskontrollpunkt selbst keine Änderungen mehr.

Ist ein Bereich mit spezifischen Sicherheitsanforderungen abzusichern, für die die Sensorik nicht sinnvoll in einem mobilen Gerät integriert werden kann oder dies aus Sicherheitserwägungen (Manipulationsschutz) nicht geraten erscheint, können an der Zugangskontrollstelle zusätzliche Geräte installiert werden, zum Beispiel ein Iris- oder ein Handvenensensor. Für die auf diesen Geräten durchzuführenden Authentifikationsschemata liefert der Zutrittscode zumindest eine behauptete Idendität ("claimed ID") des Benutzers, so dass auch hier keine spezifischen Token ausgegeben werden müssen und das System trotzdem im Verifikationsmodus läuft (1:1-Suche in der Datenbank anhand der behaupteten Identität) und keine Identifikation (1:N-Suche) erforderlich ist.

Der zeitintensive interaktive Teil eines Kontrollvorganges, bei dem es am Zugangskontrollgerät 4 zur Schlangenbildung kommen kann, wird auf ein Minimum reduziertoder ganz ausgeschlossen. Damit ist ein hoher Durchsatz mit wenigen Kontrollpunkten bei Beibehaltung des geforderten Sicherheitsniveaus möglich. Der Kontrollprozess wird entzerrt, große Teile können vom Benutzer bereits vorab erledigt werden. Es ist nicht erforderlich, ein physisches Credential auszugeben, was verloren gehen kann. Optional kann eine Personenbindung erfolgen, etwa per Gesichtserkennung, ohne dass dafür am Kontrollpunkt zusätzliche Kameras oder andere Hardware erforderlich wären. Generell ist das erreichbare Sicherheitsniveau weitgehend skalierbar.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Bereitstellen eines Zugangscodes auf einem portablen Gerät (1), welches eine Benutzerschnittstelle aufweist und eingerichtet ist für eine drahtlose Datenkommunikation, bei dem
- Referenzdaten für eine Authentifizierung in einer zentralen Datenverarbeitungseinrichtung (3) hinterlegt werden, wobei die Referenzdaten personenbezogene Daten, die biometrische Referenzdaten enthalten, für einen Nutzer des portablen Geräts (1) und eine Gerätekennung für das portable Gerät (1) umfassen,
- als Reaktion auf ein detektiertes Ereignis ein Authentifizierungsprozess ausgeführt wird, bei dem der Nutzer authentifiziert wird, wobei zum Authentifizieren des Nutzers in der zentralen Datenverarbeitungseinrichtung (3) und / oder im portablen Gerät (1) die Referenzdaten und Authentifizierungsdaten ausgewertet werden, welche personenbezogene Authentifizierungsdaten für den Nutzer, einschließlich biometrischer Authentifizierungsdaten, und eine Authentifizierungsgerätekennung für das portable Gerät (1) umfassen, und
- als Reaktion auf eine erfolgreiche Authentifizierung ein Zugangscode in dem portablen Gerät (1) bereitgestellt wird, welcher zum Bestimmen einer Zugangsberechtigung des Nutzers von einem Zugangskontrollgerät (4) ausgewertet wird und welcher als ein örtlich begrenzter Zugangscode bereitgestellt wird, welcher gelöscht wird, wenn festgestellt wird, dass das portable Gerät (1) nach dem Bereitstellen des Zugangscodes in dem portablen Gerät (1) einen vorgegebenen Ortsbereich verlässt,
wobei der Authentifizierungsprozess mittels einer auf dem portablen Gerät (1) laufenden Applikation gestartet wird, wenn ein Erreichen eines vorbestimmten Orts detektiert wird.

2. Verfahren nach Anspruch 1, wobei der Authentifizierungsprozess mittels einer auf dem portablen Gerät (1) laufenden Applikation gestartet wird, wenn folgende Ereignisse detektiert werden: Erreichen des vorbestimmten Orts und Erreichen einer Zeitvorgabe.

3. Verfahren nach Anspruch 2, wobei zum Bestimmen des Erreichens des vorbestimmten Orts elektronische Informationen einer Lokalisierungseinrichtung des portablen Geräts (1) ausgewertet werden.

4. Verfahren nach mindestens einem der vorangehenden Ansprüche, wobei die personenbezogenen Authentifizierungsdaten für den Nutzer, einschließlich die biometrischen Authentifizierungsdaten, wenigstens teilweise mittels eines oder mehrerer Funktionsmodule des portablen Geräts (1) erfasst werden.

5. Verfahren nach mindestens einem der vorangehenden Ansprüche, wobei der Zugangscode über eine Ausgabeeinrichtung des portablen Gerätes (1) ausgegeben wird.

6. Verfahren nach mindestens einem der vorangehenden Ansprüche, wobei der Zugangscode dem Zugangskontrollgerät (4) mittels NFC-Kommunikation präsentiert wird.

7. Verfahren nach mindestens einem der vorangehenden Ansprüche, wobei der Zugangscode als ein Zugangscode zeitlich begrenzter Gültigkeitsdauer bereitgestellt wird.

8. Verfahren nach mindestens einem der vorangehenden Ansprüche, wobei ein Teil der biometrischen Authentifizierungsdaten mittels einer Sensoreinrichtung vor Ort am Zugangskontrollgerät (4) erfasst wird.

9. Portables Gerät (1) mit einer Benutzerschnittstelle und einem Kommunikationsmodul für eine drahtlose Datenkommunikation, welches mittels einer installierten Applikation eingerichtet ist zur Ausführung eines Verfahrens nach mindestens einem der vorangehenden Ansprüche.

## Claims

1. A method for providing an access code on a portable device (1) that has a user interface and is configured for wireless data communication, in which
- reference data for authentication are stored in a central data processing facility (3), wherein the reference data comprise personal data containing biometric reference data for a user of the portable device (1) and a device identifier for the portable device (1),
- an authentication process in which the user is authenticated is carried out in response to a detected event, wherein in order to authenticate the user, in the central data processing facility (3) and/or in the portable device (1), the reference data and authentication data are evaluated, which comprise personal authentication data for the user, including biometric authentication data, and an authentication device identifier for the portable device (1), and
- an access code is supplied in the portable device (1) in response to a successful authentication, which access code is evaluated to determine access authorization of the user by an access control device (4) and which is provided as a spatially limited access code that is deleted when it is determined that the portable device (1) is leaving a predefined location area after providing the access code in the portable device (1),
wherein the authentication process is initiated by means of an application running on the portable device (1), when it is detected that a predetermined location has been reached.

2. The method according to claim 1, wherein the authentication process is initiated by means of an application running on the portable device (1), when the following events are detected: reaching the predetermined location and meeting a time requirement.

3. The method according to claim 2, wherein electronic information from a localization device of the portable device (1) is evaluated, in order to determine that the predetermined location has been reached.

4. The method according to at least one of the preceding claims, wherein the personal authentication data for the user, including the biometric authentication data, are captured at least partially by means of one or multiple functional modules of the portable device (1).

5. The method according to at least one of the preceding claims, wherein the access code is outputted via an output device of the portable device (1).

6. The method according to at least one of the preceding claims, wherein the access code is presented to the access control device (4) by means of NFC communication.

7. The method according to at least one of the preceding claims, wherein the access code is provided as an access code with a limited period of validity.

8. The method according to at least one of the preceding claims, wherein a portion of the biometric authentication data is captured on-site at the access control device (4) by means of a sensor device.

9. A portable device (1) with a user interface and a communication module for wireless data communication, which is configured by means of an installed application to execute a method according to at least one of the preceding claims.

## Revendications

1. Procédé pour fournir un code d'accès sur un dispositif portable (1), qui présente une interface d'utilisateur et est configuré pour une communication de données sans fil, dans lequel
- des données de référence pour l'authentification sont mémorisées dans un dispositif central de traitement de données (3), dans lequel les données de référence contiennent des données personnelles contenant des données de référence biométriques pour un utilisateur du dispositif portable (1) et un identifiant de dispositif pour le dispositif portable (1),
- en réponse à un événement détecté, un processus d'authentification est effectué dans lequel l'utilisateur est authentifié, dans lequel les données de référence et les données d'authentification, qui sont des données d'authentification personnelles, sont évaluées dans le dispositif central de traitement de données (3) et/ou dans le dispositif portable (1) pour authentifier l'utilisateur pour l'utilisateur, lesquelles données d'authentification personnelles comprennent des informations d'authentification biométriques et un identifiant de dispositif d'authentification pour le dispositif portable (1), et
- en réponse à une authentification réussie, un code d'accès est fourni dans le dispositif portable (1), qui est évalué par un dispositif de contrôle d'accès (4) pour déterminer l'autorisation d'accès de l'utilisateur et qui est fourni sous forme de code d'accès limité localement, qui est supprimé s'il est déterminé que le dispositif portable (1) utilise une zone de localisation prédéterminée après que le code d'accès a été fourni dans le dispositif portable (1).
dans lequel le processus d'authentification est démarré au moyen d'une application exécutée sur le dispositif portable (1) lorsqu'une atteinte d'un emplacement prédéterminé est détectée.

2. Procédé selon la revendication 1, dans lequel le processus d'authentification est démarré au moyen d'une application exécutée sur le dispositif portable (1) lorsque les événements suivants sont détectés : atteinte de l'emplacement prédéterminé et atteinte d'une spécification temporelle.

3. Procédé selon la revendication 2, dans lequel pour déterminer l'atteinte de l'emplacement prédéterminé, des informations électroniques provenant d'un dispositif de localisation du dispositif portable (1) sont évaluées.

4. Procédé selon au moins une des revendications précédentes, dans lequel les données personnelles d'authentification de l'utilisateur, y compris les données d'authentification biométriques, sont au moins partiellement enregistrées au moyen d'un ou plusieurs modules fonctionnels du dispositif portable (1).

5. Procédé selon au moins une des revendications précédentes, dans lequel le code d'accès est délivré via un dispositif de sortie de l'appareil portable (1).

6. Procédé selon au moins une des revendications précédentes, dans lequel le code d'accès est présenté au dispositif de contrôle d'accès (4) au moyen d'une communication NFC.

7. Procédé selon au moins une des revendications précédentes, dans lequel le code d'accès est fourni sous forme d'un code d'accès à durée de validité limitée.

8. Procédé selon au moins une des revendications précédentes, dans lequel une partie des données d'authentification biométrique est enregistrée au moyen d'un dispositif de capteur sur place au niveau du dispositif de contrôle d'accès (4).

9. Dispositif portable (1) doté d'une interface d'utilisateur et d'un module de communication pour la communication de données sans fil, qui est configuré au moyen d'une application installée pour mettre en oeuvre un procédé selon au moins une des revendications précédentes.
